# EUROPÄISCHE PATENTSCHRIFT

(11) **EP 1 456 623 B1**
(45) Veröffentlichungstag und Bekanntmachung des Hinweises auf die Patenterteilung: **25.08.2010**
(21) Anmeldenummer: 02795150.8
(22) Anmeldetag: 11.12.2002
(51) Int. Cl.: G01N 1/31

(54) **VORRICHTUNG ZUR BEHANDLUNG VON HISTOLOGISCHEN PROBEN**
UNIT FOR THE TREATMENT OF HISTOLOGICAL SAMPLES
DISPOSITIF DE TRAITEMENT D'ECHANTILLONS HISTOLOGIQUES

(30) Priorität: 21.12.2001 DE 10163488
(43) Veröffentlichungstag der Anmeldung: 15.09.2004
(73) Patentinhaber: Microm International GmbH, 69190 Walldorf (DE)
(72) Erfinder: FREDENBURGH, Jerry, Plainwell, MI 49080 (US)
(74) Vertreter: Weber, Walter
(86) Internationale Anmeldenummer: PCT/EP2002/014036
(87) Internationale Veröffentlichungsnummer: WO 2003/054519

(56) Entgegenhaltungen:
- EP-A- 0 969 277
- US-A- 5 073 504
- US-A- 5 273 905
- US-A- 5 560 956
- US-A- 5 965 454

## Beschreibung

Die Erfindung betrifft eine Vorrichtung zur Behandlung von histologischen Proben, um diese zur Bearbeitung mit einem Mikrotom geeignet zu machen, mit einer Behandlungskammer und einer Einrichtung zur Zu- und Abführung von Behandlungsmitteln zu beziehungsweise von der Behandlungskammer sowie einer Steuerung für die Durchführung der Behandlung, einschließlich der Zu- und Abführung der dafür erforderlichen Behandlungsmittel, wobei die Behandlungskammer als Trommel zur Aufnahme für mehrere Behältnisse für Kassetten mit Proben ausgebildet ist, die derart drehbar ist, daß die Behältnisse durch eine teilweise Füllung der Behandlungskammer mit einem Behandlungsmittel infolge der Drehung immer wieder in das jeweilige Behandlungsmittel eintauchen.

Eine Vorrichtung dieser Art ist beispielsweise aus der EP 0 969 277 A1 bekannt. Derartige Vorrichtungen dienen der Aufbereitung von histologischen Proben für mikroskopische Untersuchungen, wobei die zur Untersuchung entnommenen Proben einer Reihe von aufeinanderfolgenden Arbeitsschritten unterzogen werden, wie beispielsweise der Fixation, z. B. in einer wässerigen Formaldehydlösung, dem Dehydrieren, dem Clearing und dem Infiltrieren mit Paraffin oder einem anderen geeigneten Wachs. Bei der Dehydrierung werden die fixierten Proben mit einem Alkoholreagens allmählich steigender Konzentration behandelt. Bei dem Clearing werden die dehydrierten Proben ein- oder mehrmals mit einem Clearingsmittel, z. B. Xylol behandelt. Letzteres ist ein Zwischenmedium, das der Entfernung des Alkohols und der nachfolgenden Einbringung von Paraffin dient, da eine unmittelbare Ersetzung des Alkohols durch Paraffin nicht möglich ist. Außerdem wird durch das Clearing eine Kontrastverstärkung erzielt. Für die Infiltration mit Paraffin (oder einem anderen Wachs) werden die dehydrierten und geclearten Proben ebenfalls mehrmals in geschmolzenes Wachs getaucht. Erst danach ist die histologische Probe zur Bearbeitung mit einem Mikrotom geeignet. Dabei werden Dünnschnitte hergestellt, die in einem Mikroskop untersucht werden können.

Eine Vorrichtung der eingangs genannten Art ist aus der EP 0 969 277 A1 bekannt. Diese weist eine einzige Behandlungskammer auf, auch wenn diese in mehrere Kammern zur Aufnahme von Proben unterteilt ist. Bei dieser Vorrichtung sind die Proben in einer Trommel angeordnet und werden durch deren Drehung immer wieder in das jeweilige Behandlungsmittel eingetaucht. Durch die nur eine Behandlungskammer können Proben nur in diese gefüllt und nur gemeinsam einer Behandlung unterzogen werden. Normalerweise erfolgt dann ein Programmdurchlauf, bei dem eine Tagesproduktion über Nacht bearbeitet wird.

Wenn diese Vorrichtung auch für die Behandlung großer Mengen von Proben normaler Größe dann optimal geeignet ist, wenn diese ausgehend vom Rohzustand der Entnahme in einen Zustand gebracht werden sollen, in dem sie zur Bearbeitung in einem Mikrotom geeignet sind, so entspricht diese Vorrichtung insbesondere im medizinischen Bereich nicht immer den Bedürfnissen, da oftmals unterschiedliche Behandlungen erfolgen müssen oder kleinere Mengen einer Eilbehandlung unterzogen werden müssen. Selbst, wenn die vorgenannte Vorrichtung für Eilbehandlungen eingerichtet ist, tritt das Problem auf, daß meist nur eine geringe Menge von Proben für eine Behandlung ansteht. Dies ist meist bei Biopsieproben der Fall, die wegen ihrer im Vergleich zu den anderen Proben wesentlich geringeren Größe für eine Eilbehandlung geeignet sind. Mit kleinen Mengen ist eine große Behandlungskammer in der Regel auch nicht annähernd befüllbar, was unwirtschaftlich ist. Um Engpässe, wenn verschiedene Behandlungen durchgeführt werden sollen, oder die vorgenannte Unwirtschaftlichkeit zu vermeiden, wäre es möglich, mehrere Geräte für unterschiedliche Behandlungen und möglichst mit unterschiedlichen Programmausstattungen und Größen der Behandlungskammern vorzusehen. Dies ist jedoch ebenfalls unwirtschaftlich, da Steuerung und Behandlungsmittelzu- und -abführung dann mehrfach vorhanden sein müssen und gewartet sowie nachgefüllt werden müssen. Weiterhin ist in vielen Labors der Platz für mehrere Geräte nicht vorhanden.

Eine Vorrichtung mit mehreren Behandlunsgkammern ist aus der US 5,273,905 bekannt, bei der jedoch in allen Behandlungskammern die Behandlung dadurch erfolgt, daß eine Einrichtung entsprechend oft eine Zu- und Abführung des jeweiligen Behandlungsmittels bewirkt. Allerdings geht es bei dieser Schrift nicht um die Aufbereitung histologischer Proben, damit diese zur Bearbeitung in einem Mikrotom geeignet sind, sondern es geht um die Bearbeitung bereits mikrotomierter Proben.

Der Erfindung liegt die Aufgabe zugrunde, eine Vorrichtung der eingangs genannten Art derart weiterzubilden, daß auf wirtschaftliche Weise dem Bedürfnis unterschiedlicher Behandlungen, insbesondere einerseits der Langzeitbehandlung einer größeren Menge von Proben und andererseits der Eilbehandlung einer kleinen Menge von Proben, vor allem von Biopsieproben, Rechnung getragen wird.

Die Aufgabe wird erfindungsgemäß dadurch gelöst, daß
1. mindestens eine weitere Behandlungskammer ist vorgesehen,
2. mit dieser sind unabhängig von der ersten Behandlungskammer Behandlungen durchführbar,
3. die weitere Behandlungskammer und die Einrichtung sind für eine Behandlung ausgebildet, die bewirkt wird, indem entsprechend dem Eintauchen der Proben durch Drehung der Trommel der ersten Behandlungskammer entsprechend oft eine Zu- und Abführung des jeweiligen Behandlungsmittels stattfindet,
4. die Einrichtung und die Steuerung wirken auch mit der weiteren Behandlungskammer zusammen.

Durch die Erfindung kann mit einem Gerät, einer Steuerung und einer Einrichtung zur Zu- und Abführung von Behandlungsmitteln dem Bedürfnis Rechnung getragen werden, daß auf wirtschaftliche Weise geringe Probenmengen und/oder mehrere unterschiedliche Behandlungen kleinerer oder größerer Mengen von Proben durchführbar sind. Diese können zeitgleich oder auch zeitversetzt erfolgen. Im letzteren Fall besteht der Vorteil der Erfindung darin, daß eine Behandlungskammer mit Proben beschickt werden kann, solange eine oder mehrere andere Behandlungen noch laufen. Die Größe der Behandlungskammern kann an die Menge und Größe der zu erwartenden Chargen von Proben angepaßt werden, was den Vorteil eines geringeren Verbrauchs von Behandlungsmitteln bietet. Es ist auch möglich, die Behandlungskammern an die zu bearbeitenden Proben, beziehungsweise verschiedene Halterungen für Proben anzupassen oder sie für bestimmte Behandlungsarten zu optimieren. Dies läßt sich alles in einem Gerät und mit einer Steuerung und einer Behandlungsmittelversorgung und gegebenenfalls -bevorratung realisieren, was kontengünstig, platzsparend und bezüglich der Wartung und gegebenenfalls Bevorratung weniger arbeitsintensiv ist.

Insbesondere der Vielseitigkeit des Einsatzes der erfindungsgemäßen Vorrichtung sowie ihrer Wirtschaftlichkeit dienen die folgenden Weiterbildungen der Erfindung.

Vorzugsweise werden die Behandlungskammern für unterschiedliche Behandlungen ausgebildet. Beispielsweise ist es oft so, daß mit Kurzprogrammen eilige Proben in kleinen Mengen zu bearbeiten sind. Dann sollten die Behandlungskammern verschiedene Größen aufweisen. Dazu kann vorgesehen sein, daß die Hauptbehandlungskammer eine normale Größe aufweist und daß eine weitere Behandlungskammer wesentlich kleiner ist als die erste Behandlungskammer.

Auch können die Behandlungskammern verschiedene Ausstattungen aufweisen. Diese können den verschiedenen Behandlungen angepaßt sein oder an unterschiedliche Träger, auf denen die Proben angeordnet sind. So kann vorgesehen sein, daß eine weitere Behandlungskammer zur Aufnahme von Biopsie-Proben ausgebildet ist.

Zur Realisierung verschiedener Behandlungen wird die Steuerung vorzugsweise derart ausgebildet, daß mit ihr verschiedene Behandlungen durchführbar sind. Auf diese Weise können ein Normalprogramm oder Kurzprogramme durchführbar sein oder es können spezielle Programme vorgesehen sein, wie beispielsweise eine Behandlungen für Biopsieproben. Um die Behandlungsprogramme wechseln zu können, ist es zweckmäßig, wenn die Steuerung derart ausgebildet ist, daß sie mit unterschiedlichen Behandlungsprogrammen beschickbar ist. Dies kann mittels einer Eingabeeinrichtung, durch Datenträger oder mittels einer Datenleitung erfolgen, die mit einem Rechner verbunden ist.

Die erste Behandlungskammer ist ausgebildet zur Aufnahme für mehrere Behältnisse für mehrere Kassetten mit Proben und die weitere Behandlungskammer zur Aufnahme eines solchen Behältnisses. Dadurch wird die Handhabung vereinfacht, da die Behältnisse für mehrere Kassetten gleich ausgebildet sein können und daher für die Beschickung beider Behandlungskammern dienen können. Die weitere Behandlungskammer ist nur für die Aufnahme eines Behältnisses ausgebildet, damit auf wirtschaftliche Weise kleinere Probenchargen einer Kurzbehandlung unterzogen werden können oder daß diese Proben noch am selben Tag fertig gestellt werden können, da sie besonders eilig sind. Selbstverständlich sollte die zweite Behandlungskammer auch andere Behältnisse aufnehmen können, wie beispielsweise solche, die für die Aufnahme von Biopsieproben ausgebildet sind.

Zur Versorgung mit den verschiedenen Behandlungsmitteln wird vorgeschlagen, daß eine mit den Behandlungskammern verbundene Ventileinheit angeordnet ist, durch welche mittels der Steuerung die Behandlungskammern jeweils wahlweise mit dem jeweiligen Behandlungsmittel befüllt werden können. Weiterhin kann vorgesehen sein, daß die Ventileinheit und die Steuerung auch zur Bewirkung der Entleerung der Behandlungskammern und/oder der Leitungen ausgebildet ist.

In der Vorrichtung können mehrere Vorratsbehälter für Behandlungsmittel angeordnet sein, mit denen die Ventileinheit verbunden ist. Selbstverständlich könnte die Ventileinheit natürlich auch mit einer zentralen Versorgung mit den verschiedensten Behandlungsmitteln verbunden sein. Im erst genannten Fall ist es zweckmäßig, wenn eine weitere oder dieselbe Ventileinheit und die Steuerung auch zur Befüllung der Vorratsbehälter aus einer außerhalb der Vorrichtung liegenden Bevorratung mit Behandlungsmitteln ausgebildet sind. Dadurch wird ein ständiges manuelles Nachfüllen und Überprüfen der Vorratsbehälter mit den Behandlungsmitteln vermieden, was wiederum Wartungsarbeiten einspart.

Die Erfindung wird nachfolgend anhand von in der Zeichnung dargestellten Ausführungsbeispielen erläutert. Es zeigen
- **Fig. 1**: eine Prinzipskizze der erfindungsgemäßen Vorrichtung,
- **Fig. 2**: die erste Behandlungskammer eines ersten Ausführungsbeispiels,
- **Fig. 2a**: die weitere Behandlungskammer des ersten Ausführungsbeispiels,
- **Fig. 3**: die erste Behandlungskammer eines zweiten Ausführungsbeispiels,
- **Fig. 4**: diese Behandlungskammer im Längsschnitt und
- **Fig. 4a**: die weitere Behandlungskammer des zweiten Ausführungsbeispiels.

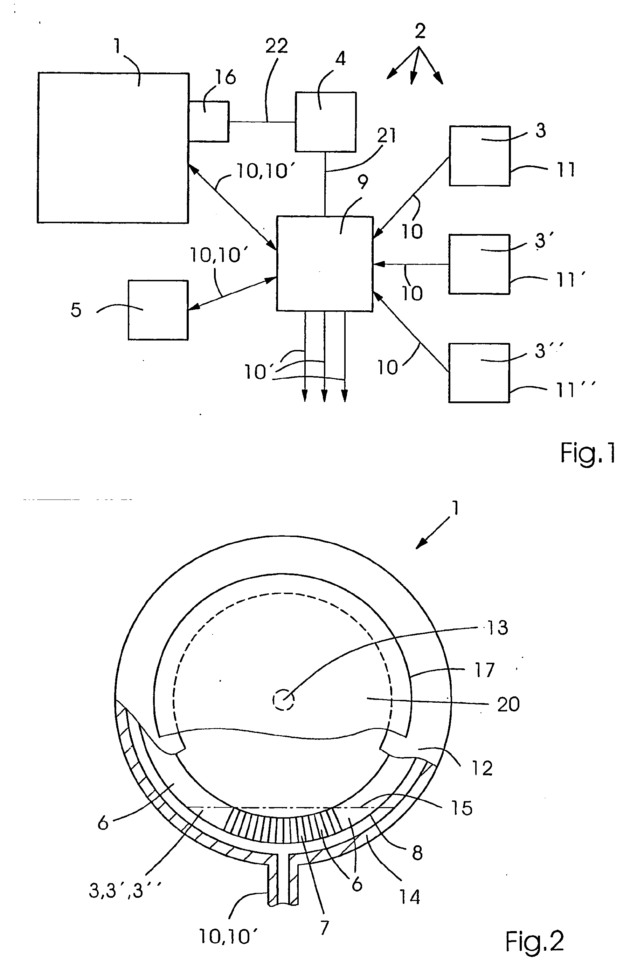

**Fig. 1** zeigt eine Prinzipskizze der erfindungsgemäßen Vorrichtung mit einer schematischen Darstellung der einzelnen Elemente. Zusätzlich zur Behandlungskammer 1 ist eine weitere Behandlungskammer 5 angeordnet, welche mittels derselben Einrichtung 2 zur Zu- und Abführung von Behandlungsmitteln 3, 3' oder 3" verbunden ist. Für diese Zu- und Abführung von Behandlungsmitteln 3, 3' oder 3" dient eine entsprechend ausgebildete Ventileinheit 9, die mittels einer Steuerung 4 über eine Verbindung 21 gesteuert wird. Die Ventileinheit 9 bezieht die Behandlungsmittel 3, 3' oder 3" mittels Zuleitungen 10, die beispielsweise mit Vorratsbehältern 11, 11', 11" für die Behandlungsmittel 3, 3', 3" verbunden ist. Diese Vorratsbehälter 11, 11'. 11" können sich in der Vorrichtung befinden oder sie können extern angeordnet sein. Die Anzahl richtet sich danach, wie viele verschiedene Behandlungsmittel 3, 3', 3", ... für die jeweilige Behandlung benötigt werden. Ist die Steuerung 4 mit verschiedenen Behandlungsprogrammen für die Gewebeproben geladen, so ist es zweckmäßig, so viele Behandlungsmittel 3, 3', 3", ... bereitzuhalten, wie für diese Programme erforderlich sind. Die Steuerung 4 weist auch eine Verbindung 22 zum Antrieb 16 für die Trommel 8 oder 8' der Behandlungskammer 1 auf, um die der Behandlung entsprechende Drehung der Trommel 8 oder 8' zu bewirken.

Die Ventileinheit 9 versorgt die erste Behandlungskammer 1 und die weitere Behandlungskammer 5 mittels Zuleitungen 10, welche gleichzeitig als Ableitungen 10' dienen können. Es können an die Ventileinheit 9 so viele Ableitungen 10' angeschlossen werden, wie Behandlungsmittel 3, 3', 3" verarbeitet werden. Dadurch ist es möglich, die Behandlungsmittel 3, 3', 3" getrennt abzuführen und einem Recycling zuzuführen. Selbstverständlich ist es nur beispielhaft, daß hier nur eine weitere Behandlungskammer 5 gezeichnet ist, es können auch weitere vorgesehen werden.

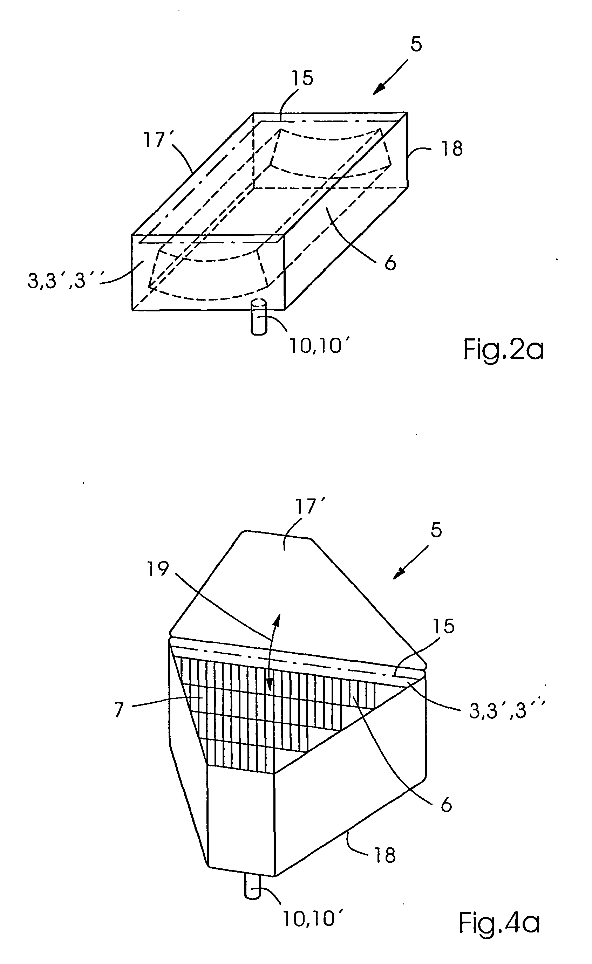

**Fig. 2** zeigt die erste Behandlungskammer 1 eines ersten Ausführungsbeispiels der Erfindung. Diese Behandlungskammer 1 wird von einem zylindrischen Gehäuse 14 gebildet, in welchem eine Trommel 8' drehbar gelagert ist. Diese ebenfalls zylindrische Trommel 8'ist mittels einer Achse 13 und einem nicht dargestellten Antrieb 16 antreibbar. Das Gehäuse 14 weist an seiner Frontseite eine Zugangsöffnung 20 auf, welche mittels eines Deckels 17 verschließbar ist. Die Trommel 8 trägt an ihrem Umfang Behältnisse 6, in denen jeweils mehrere Kassetten 7 für Proben angeordnet sind. Diese wurden beispielhaft bei dem unteren Behältnis 6 eingezeichnet. Die Frontseite des Gehäuses 14 weist einen Rand 12 auf, der derart bemessen ist, daß ein Flüssigkeitsspiegel 15 eines Behandlungsmittels 3, 3', 3" möglich ist, der so hoch liegt, daß alle Kassetten 7 mit den Gewebeproben bei der Drehung der Trommel 8 benetzt werden. Diese erste Behandlungskammer 1 weist eine Leitung 10, 10' für die Zu- und Ableitung der Behandlungsmittel 3, 3', 3" auf. Sie ist entsprechend dem Schema der Fig. 1 in die erfindungsgemäße Vorrichtung eingeordnet.

**Fig. 2a** zeigt die weitere Behandlungskammer 5 dieses ersten Ausführungsbeispiels. Diese Behandlungskammer 5 weist ein Gehäuse 18 auf, das derart bemessen ist, daß diese Behandlungskammer 5 eines der Behältnisse 6 für Kassetten 7 aufnehmen kann, das auch in der Behandlungskammer 1 der Fig. 2 einsetzbar ist. Das Gehäuse 18 ist mittels eines Deckels 17' verschließbar und weist ebenfalls eine Leitung 10, 10' für die Zu- und Ableitung von Behandlungsmitteln 3, 3', 3" auf. Es ist derart bemessen, daß der Flüssigkeitsspiegel 15 des Behandlungsmittels 3, 3', 3" so hoch steigen kann, daß das Behältnis 6 völlig im Behandlungsmittel 3, 3', 3" liegt.

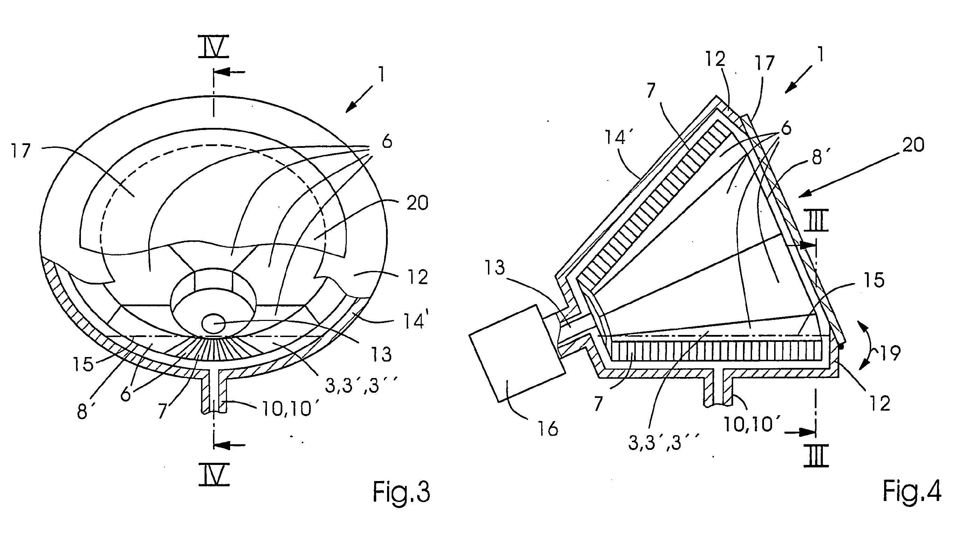

**Fig. 3** zeigt die erste Behandlungskammer 1 eines zweiten Ausführungsbeispiels. Diese erste Behandlungskammer 1 weist ein Gehäuse 14' auf, das kegelstumpfförmig ausgebildet und derart gelagert ist, daß eine Linie der Umfangsfläche waagerecht liegt. Durch diese waagerechte Lage und einen entsprechenden Rand 12 wird erreicht, daß ein Flüssigkeitsspiegel 15 eines Behandlungsmittels 3, 3', 3" möglich ist, derart, daß - wie schon zu Fig. 2 beschrieben - alle Kassetten 7 für Proben benetzt werden können. Um dies zu erreichen, ist auch hier eine Trommel 8' vorgesehen, die jedoch entsprechend dem Gehäuse 14' ebenfalls kegelstumpfförmig ausgebildet ist und an ihrem schmalen Ende eine Achse 13 aufweist, welche mit einem Antrieb 16 verbunden ist.

Das in Fig. 3 dargestellte Gehäuse 14' ist im unteren Bereich der Vorderseite geschnitten, dieser Schnitt ist in Fig. 4 unter III-III eingezeichnet. Dadurch fehlt in Fig. 3 in diesem unteren Bereich auch der Rand 12, der das Behandlungsmittel 3, 3', 3" bis zum Flüssigkeitsspiegel 15 hält. Ebenfalls geschnitten ist der Deckel 17, der dem Verschluß der Zugangsöffnung 20 dient. Die Behandlungskammer 1 weist eine Leitung 10, 10' für die Zu- und Ableitung der Behandlungsmittel 3, 3', 3" auf. Auch diese Behandlungskammer 1 des zweiten Ausführungsbeispiels wird entsprechend der Prinzipskizze der Fig. 1 mit den übrigen dort eingezeichneten Elementen kombiniert.

Zur weiteren Verdeutlichung der Ausgestaltung der Behandlungskammer 1 des zweiten Ausführungsbeispiels ist in **Fig. 4** ein Schnitt IV-IV, wie er in Fig. 3 eingezeichnet ist, dargestellt. Dort ist ersichtlich, wie die unterste Lage von Kassetten 7 für Proben völlig unterhalb des Flüssigkeitsspiegels 15 liegt, welcher durch den Rand 12 auch dann gehalten wird, wenn der Deckel 17 entsprechend dem Doppelpfeil 19 geöffnet wird. Diese Ausgestaltung ist besonders zweckmäßig, da sie eine gute Zugänglichkeit zu den Behältnissen 6 für die Kassetten 7 gewährt, auch dann, wenn sich Behandlungsmittel 3, 3', 3" in der Behandlungskammer 1 befindet.

**Fig. 4a** zeigt die weitere Behandlungskammer 5, des zweiten Ausführungsbeispiels. Auch diese weitere Behandlungskammer 5 ist derart ausgebildet, daß sie eines der Behältnisse 6 für die Kassetten 7, wie sie bereits in Fig. 3 und 4 eingezeichnet wurden, aufnehmen kann. Dazu weist das Gehäuse 18 und der Deckel 17' eine trapezförmige Gestalt zur Aufnahme der Behältnisse 6 auf. Diese sind trapezförmig, weil sich dies aus ihrer Anordnung in der kegelstumpfförmigen Trommel 8' ergibt. Im übrigen entspricht diese weitere Behandlungskammer 5 bezüglich ihrer Funktionen der in Fig. 2a dargestellten.

Selbstverständlich sind die Ausgestaltungen der Fig. 2 bis 4a lediglich Ausführungsbeispiele für die erfindungsgemäße Vorrichtung. Auch die Anordnung muß nicht auf zwei Behandlungskammern 1 und 5 je Vorrichtung beschränkt sein.

Wesentlich für die Ausgestaltung der einzelnen Behandlungskammern 1, 5 ist das Bedürfnis der Anwender. Auf diese Art und Weise kann die erfindungsgemäße Vorrichtung an die Stelle von zwei oder mehr Vorrichtungen des Standes der Technik treten, benötigt dabei nur eine Steuerung 4 und eine Einrichtung 2 zur Zu- und Abführung von Behandlungsmitteln 3, 3', 3 ". Auch die Vorratsbehälter 11, 11', 11" brauchen nicht für jede Behandlungskammer 1, 5, ... separat angeordnet, gewartet und befüllt werden.

### Bezugszeichenliste

- 1: Behandlungskammer (erste)
- 2: Einrichtung zur Zu- und Abführung von Behandlungsmitteln
- 3, 3', 3": Behandlungsmittel
- 4: Steuerung
- 5: weitere Behandlungskammer
- 6: Behältnisse für Kassetten
- 7: Kassetten für Proben
- 8, 8': Trommel
- 8: des ersten Ausführungsbeispiels
- 8': des zweiten Ausführungsbeispiels
- 9: Ventileinheit
- 10, 10': Leitungen
- 10: Zuleitung
- 10': Ableitung
- 11, 11', 11": Vorratsbehälter
- 12: Rand
- 13: Achse
- 14, 14': Gehäuse der ersten Behandlungskammer
- 14: des ersten Ausführungsbeispiels
- 14': des zweiten Ausführungsbeispiels
- 15: Flüssigkeitsspiegel
- 16: Antrieb
- 17, 17': Deckel
- 17: der erste Behandlungskammer
- 17': der zweiten Behandlungskammer
- 18: Gehäuse der zweiten Behandlungskammer
- 19: Doppelpfeil: Öffnen und Schließen der Deckel
- 20: Zugangsöffnung
- 21: Verbindung Steuerung - Ventileinheit
- 22: Verbindung Steuerung - Antrieb

## Patentansprüche

1. Vorrichtung zur Behandlung von histologischen Proben, um diese zur Bearbeitung mit einem Mikrotom geeignet zu machen, mit einer Behandlungskammer (1) und einer Einrichtung (2) zur Zu- und Abführung von Behandlungsmitteln (3, 3', 3 ") zu beziehungsweise von der Behandlungskammer (1) sowie einer Steuerung (4) für die Durchführung der Behandlung, einschließlich der Zu- und Abführung der dafür erforderlichen Behandlungsmittel (3, 3', 3"), wobei die Behandlungskammer (1) als Trommel (8) zur Aufnahme für mehrere Behältnisse (6) für mehrere Kassetten (7) mit Proben ausgebildet ist, die derart drehbar ist, daß die Behältnisse (6) durch eine teilweise Füllung der Behandlungskammer (1) mit einem Behandlungsmittel (3, 3' oder 3 ") infolge der Drehung immer wieder in das jeweilige Behandlungsmittel (3, 3' oder 3") eintauchen,
**gekennzeichnet durch,**
1. mindestens eine weitere Behandlungskammer (5) ist vorgesehen,
2. mit dieser sind unabhängig von der ersten Behandlungskammer (1) Behandlungen durchführbar,
3. die weitere Behandlungskammer (5) und die Einrichtung (2) sind für eine Behandlung ausgebildet, die bewirkt wird, indem entsprechend dem Eintauchen der Proben **durch** Drehung der Trommel (8) der ersten Behandlungskammer (1) entsprechend oft eine Zu- und Abführung des jeweiligen Behandlungsmittels (3, 3' oder 3") stattfindet,
4. die Einrichtung (2) und die Steuerung (4) wirken auch mit der weiteren Behandlungskammer (5) zusammen.

2. Vorrichtung nach Anspruch 1,
**dadurch gekennzeichnet,**
**daß** die Behandlungskammern (1, 5) für unterschiedliche Behandlungen ausgebildet sind.

3. Vorrichtung nach Anspruch 1 oder 2,
**dadurch gekennzeichnet,**
**daß** die Behandlungskammern (1, 5) verschiedene Größen aufweisen.

4. Vorrichtung nach Anspruch 3,
**dadurch gekennzeichnet,**
**daß** eine weitere Behandlungskammer (5) wesentlich kleiner ist als die erste Behandlungskammer (1).

5. Vorrichtung nach Anspruch 2, 3 oder 4,
**dadurch gekennzeichnet,**
**daß** die Behandlungskammern (1, 5) verschiedene Ausstattungen aufweisen.

6. Vorrichtung nach Anspruch 5,
**dadurch gekennzeichnet,**
**daß** eine weitere Behandlungskammer (5) zur Aufnahme von Biopsie-Proben ausgebildet ist.

7. Vorrichtung nach einem der Ansprüche 1 bis 6,
**dadurch gekennzeichnet,**
**daß** die Steuerung (4) derart ausgebildet ist, daß mit ihr verschiedene Behandlungen durchführbar sind.

8. Vorrichtung nach Anspruch 7,
**dadurch gekennzeichnet,**
**daß** auch Kurzprogramme durchführbar sind.

9. Vorrichtung nach Anspruch 7 oder 8,
**dadurch gekennzeichnet,**
**daß** auch Behandlungen für Biopsie-Proben durchführbar sind.

10. Vorrichtung nach einem der Ansprüche 7 bis 9,
**dadurch gekennzeichnet,**
**daß** die Steuerung (4) derart ausgebildet ist, daß sie mit unterschiedlichen Behandlungsprogrammen beschickbar ist.

11. Vorrichtung nach einem der Ansprüche 1 bis 10,
**dadurch gekennzeichnet,**
**daß** die erste Behandlungskammer (1) zur Aufnahme für mehrere Behältnisse (6) für mehrere Kassetten (7) mit Proben und die weitere Behandlungskammer (5) nur für die Aufnahme eines solchen Behältnisses (6) ausgebildet ist.

12. Vorrichtung nach einem der Ansprüche 1 bis 11,
**dadurch gekennzeichnet,**
**daß** eine mit den Behandlungskammern (1, 5) verbundene Ventileinheit (9) angeordnet ist, durch welche mittels der Steuerung (4) die Behandlungskammern (1, 5) mit dem der jeweiligen Behandlung entsprechenden Behandlungsmittel (3, 3' oder 3") befüllt werden können.

13. Vorrichtung nach Anspruch 12,
**dadurch gekennzeichnet,**
**daß** die Ventileinheit (9) und die Steuerung (4) auch zur Bewirkung der Entleerung der Behandlungskammern (1, 5) ausgebildet sind.

14. Vorrichtung nach Anspruch 13,
**dadurch gekennzeichnet,**
**daß** die Ventileinheit (9) auch zur Entlüftung der Leitungen (10, 10') ausgebildet ist.

15. Vorrichtung nach einem der Ansprüche 12 bis 14,
**dadurch gekennzeichnet,**
**daß** in der Vorrichtung mehrere Vorratsbehälter (11, 11', 11") für Behandlungsmittel (3, 3', 3") angeordnet sind, mit denen die Ventileinheit (9) verbunden ist.

16. Vorrichtung nach Anspruch 15,
**dadurch gekennzeichnet,**
**daß** eine Ventileinheit (z. B. 9) und die Steuerung (4) auch zur Befüllung der Vorratsbehälter (11, 11', 11") aus einer außerhalb der Vorrichtung liegenden Bevorratung mit Behandlungsmitteln (3, 3', 3") ausgebildet sind.

## Claims

1. A device for the treatment of histological specimens to render them suitable for treatment with a microtome, comprising a treatment chamber (1) and a contrivance (2) for feeding and removing treatment means (3, 3', 3") to and from said treatment chamber (1) and also a control unit (4) for controlling the treatment, including feeding and removal of the necessary treatment means (3, 3', 3"), wherein the treatment chamber (1) is in the form of a drum (8) for the accommodation of a plurality of receptacles (6) for a plurality of cassettes (7) containing specimens, which drum is rotatable in such a manner, that said receptacles (6), due to partial filling of said treatment chamber (1) with treatment means (3, 3' or 3") and on account of said rotation, are repeatedly immersed in said treatment means (3, 3' or 3"),
**characterized in that**
1. at least one further treatment chamber (5) is provided,
2. with which treatments can be carried out independently of said first treatment chamber (1),
3, said further treatment chamber (5) and said contrivance (2) are adapted for treatment caused by effecting feeding and removal of said treatment means (3, 3' or 3") in rhythm with the immersion of said specimens as caused by the rotation of said drum (8) in said first treatment chamber (1),
4. said contrivance (2) and said control unit (4) also interact with said further treatment chamber (5).

2. The device as defined in claim 1,
**characterized in that**
said treatment chambers (1, 5) are adapted for different treatments.

3. The device as defined in claim 1 or claim 2,
**characterized in that**
said treatment chambers (1, 5) have different sizes.

4. The device as defined in claim 3,
**characterized in that**
a further treatment chamber (5) is substantially smaller than said first treatment chamber (1).

5. The device as defined in claim 2, claim 3, or claim 4,
**characterized in that**
said treatment chambers (1, 5) are differently equipped.

6. The device as defined in claim 5,
**characterized in that**
a further treatment chamber (5) is adapted for the accommodation of biopsy specimens.

7. The device as defined in any one of claims 1 to 6,
**characterized in that**
said control unit (4) is designed such that it is capable of executing various treatments.

8. The device as defined in claim 7,
**characterized in that**
short time programs can also be carried out.

9. The device as defined in claim 7 or claim 8,
**characterized in that**
treatments for biopsy specimens can also be carried out.

10. The device as defined in any one of claims 7 to 9,
**characterized in that**
said control unit (4) is designed such that it is capable of being loaded with different treatment programs.

11. The device as defined in any one of claims 1 to 10,
**characterized in that**
said first treatment chamber (1) is adapted for the accommodation of a plurality of receptacles (6) for a plurality of cassettes (7) containing said specimens, and said further treatment chamber (5) is adapted for the accommodation of only one such receptacle (6).

12. The device as defined in any one of claims 1 to 11,
**characterized in that**
a valve unit (9) connected to said treatment chambers (1, 5) is disposed such that it makes it possible to fill said treatment chambers (1, 5) via said control unit (4) with said treatment means (3, 3' or 3") as required for the respective treatment.

13. The device as defined in claim 12,
**characterized in that**
said valve unit (9) and said control unit (4) are also adapted for draining said treatment chambers (1, 5).

14. The device as defined in claim 13,
**characterized in that**
said valve unit (9) is also adapted for deaerating the conduits (10, 10').

15. The device as defined in any one of claims 12 to 14,
**characterized in that**
in said device a plurality of reservoirs (11, 11', 11 ") for treatment means (3, 3', 3") are disposed, to which reservoirs said valve unit (9) is connected.

16. The device as defined in claim 15,
**characterized in that**
a valve unit (e.g. 9) and said control unit (4) are also adapted for filling said reservoirs (11, 11', 11 ") with treatment means (3, 3', 3") from storage means disposed outside said device.

## Revendications

1. Dispositif de traitement d'échantillons histologiques afin de les rendre appropriés pour un traitement avec un microtome, comprenant une chambre de traitement (1) et un dispositif (2) pour l'amenée et l'évacuation de moyens de traitement (3, 3', 3") à ou depuis la chambre de traitement (1), ainsi qu'une commande (4) pour l'exécution du traitement y compris l'amenée et l'évacuation des moyens de traitement (3, 3', 3"), la chambre de traitement (1) étant réalisée comme un tambour (8) pour le logement de plusieurs récipients (6) pour plusieurs cassettes (7) avec des échantillons, qui sont rotatifs de sorte que les récipients (6) sont plongés toujours dans le moyen de traitement respectif (3, 3'ou 3") par un remplissage partiel de la chambre de traitement (1) avec un moyen de traitement (3, 3'ou 3") par rotation, **caractérisé en ce qu'**
1. il est prévu au moins une autre chambre de traitement (5)
2. celle-ci permet d'effectuer des traitements indépendamment de la première chambre de traitement (1),
3. l'autre chambre de traitement (5) et le dispositif (2) sont réalisés pour le traitement provoqué dans le fait qu'en fonction de la plongée des échantillons par rotation du tambour (8) de la première chambre de traitement (1), en conséquence souvent une amenée et une évacuation du moyen de traitement respectif (3, 3'ou 3") se produisent,
4. le dispositif (2) et la commande (4) coopèrent également avec l'autre chambre de traitement (5).

2. Dispositif selon la revendication 1, **caractérisé en ce que** les chambres de traitement (1, 5) sont réalisées pour des traitements différents.

3. Dispositif selon la revendication 1 ou 2, **caractérisé en ce que** les chambres de traitement (1, 5) présentent des dimensions différentes.

4. Dispositif selon la revendication 3, **caractérisé en ce qu'**une autre chambre de traitement (5) est sensiblement plus petite que la première chambre de traitement (1).

5. Dispositif selon la revendication 2, 3 ou 4, **caractérisé en ce que** les chambres de traitement (1, 5) présentent des équipements différents.

6. Dispositif selon la revendication 5, **caractérisé en ce qu'**une autre chambre de traitement (5) est conçue pour la réception d'échantillons de biopsie.

7. Dispositif selon l'une des revendications 1 à 6, **caractérisé en ce que** la commande (4) est réalisée de sorte que plusieurs traitements différents sont exécutables.

8. Dispositif selon la revendication 7, **caractérisé en ce que** des programmes courts peuvent être exécutés.

9. Dispositif selon la revendication 7 ou 8, **caractérisé en ce que** des traitements pour des échantillons de biopsie sont également exécutables.

10. Dispositif selon l'une des revendications 7 à 9, **caractérisé en ce que** la commande (4) est réalisée pour recevoir des programmes de traitement différents.

11. Dispositif selon l'une des revendications 1 à 10, **caractérisé en ce que** la première chambre de traitement (1) est réalisée pour recevoir plusieurs récipients (6) pour plusieurs cassettes (7) avec des échantillons et l'autre chambre de traitement (5) que pour la réception d'un tel récipient (6).

12. Dispositif selon l'une des revendications 1 à 11, **caractérisé en ce qu'**une unité de soupape (9) reliée aux chambres de traitement (1, 5) qui permet de remplir par la commande (4) les chambres de traitement (1, 5) du moyen de traitement (3, 3'ou 3") correspondant au traitement respectif.

13. Dispositif selon la revendication 12, **caractérisé en ce que** l'unité de soupapes (9) et la commande (4) sont réalisées également pour provoquer le vidage des chambres de traitement (1, 5).

14. Dispositif selon la revendication 13, **caractérisé en ce que** l'unité de soupapes (9) est également réalisée pour la purge des conduites (10, 10').

15. Dispositifs selon l'une des revendications 12 à 14, **caractérisé en ce que** plusieurs récipients (11, 11', 11") pour les moyens de traitement (3,3', 3") sont disposés dans le dispositif et sont reliés à l'unité de soupapes (9).

16. Dispositif selon la revendication 15, **caractérisé en ce qu'**une unité de soupape (par ex. 9) et la commande (4) sont réalisées également pour le remplissage des réservoirs (11. 11', 11") provenant d'une réserve de moyens de traitement (3, 3', 3") se trouvant à l'extérieur du dispositif.
